(19) Europäisches Patentamt
European Patent Office
Office européen des brevets

(11) **EP 4 779 558 A1**

(12) **EUROPEAN PATENT APPLICATION**
published in accordance with Art. 153(4) EPC

(43) Date of publication:
**22.07.2026 Bulletin 2026/30**

(21) Application number: **24884110.8**

(22) Date of filing: **12.08.2024**

(51) International Patent Classification (IPC):
***G06T 5/92*** *(2024.01)*

(52) Cooperative Patent Classification (CPC):
**G06T 5/40; G06T 5/60; G06T 5/92**

(86) International application number:
**PCT/CN2024/111449**

(87) International publication number:
**WO 2025/092103 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.10.2023 CN 202311440178**

(71) Applicant: **HUAWEI TECHNOLOGIES CO., LTD.
Shenzhen, Guangdong 518129 (CN)**

(72) Inventors:
• **ZHANG, Jiwu**
  **Shenzhen, Guangdong 518129 (CN)**
• **YU, Quanhe**
  **Shenzhen, Guangdong 518129 (CN)**
• **XU, Weiwei**
  **Shenzhen, Guangdong 518129 (CN)**
• **WANG, Yichuan**
  **Shenzhen, Guangdong 518129 (CN)**

(74) Representative: **Körber, Martin Hans
Mitscherlich PartmbB
Karlstraße 7
80333 München (DE)**

(54) **IMAGE ENCODING METHOD, IMAGE DECODING METHOD, AND RELATED APPARATUS**

(57) This application discloses an image encoding method, an image decoding method, and a related apparatus, and pertains to the image processing field. The method includes: obtaining a first image, where the first image is an image on which tone mapping needs to be performed; determining location coordinates of a plurality of sampling points of a tone mapping curve corresponding to the first image based on the first image by using an optimization equation or a deep learning network model; and encoding the first image and the location coordinates of the plurality of sampling points into a bitstream. In this application, the optimization equation or the deep learning model is established based on at least one of an image contrast, image luminance, and a human-eye-sensed contrast threshold, and the image on which tone mapping needs to be performed is encoded by using the optimization equation or the deep learning model. In this way, a decoder side establishes the tone mapping curve based on the bitstream, and implements tone mapping of the image, so that display effect of the image is significantly improved.

Obtain a first image, where the first image is an image on which tone mapping needs to be performed ⟶ 201

Determine location coordinates of a plurality of sampling points of a tone mapping curve corresponding to the first image based on the first image by using an optimization equation or a deep learning network model ⟶ 202

Encode the first image and the location coordinates of the plurality of sampling points into a bitstream ⟶ 203

FIG. 2

EP 4 779 558 A1

**Description**

This application claims priority to Chinese Patent Application No. 202311440178.3, filed on October 31, 2023 and entitled "IMAGE ENCODING METHOD, IMAGE DECODING METHOD, AND RELATED APPARATUS", which is incorporated herein by reference in its entirety.

**TECHNICAL FIELD**

This application relates to the image processing field, and in particular, to an image encoding method, an image decoding method, and a related apparatus.

**BACKGROUND**

A high dynamic range (high dynamic range, HDR) technology has developed rapidly in recent years. The HDR technology can improve a contrast between luminance extremes of an image, and display rich details of a luminous region and a dark region, to present a picture that more closely matches a sense of a human eye. However, a common display device can display only a low dynamic range. Therefore, tone mapping needs to be performed on an HDR image, so that the HDR image can be normally displayed in the common display device.

In a related technology, a tone mapping method is usually to align maximum image luminance and minimum image luminance of an image with a maximum screen luminance value and a minimum screen luminance of a display, and for image luminance between the maximum image luminance and the minimum image luminance, global or local mapping is performed based on a tone mapping curve, to map the image luminance to a range between the maximum screen luminance and the minimum screen luminance. However, currently used tone mapping curves are usually Dolby sigmoidal curves, Bezier curves, and the like. Performing tone mapping based on these curves may distort an image obtained through tone mapping, resulting in poor display effect.

**SUMMARY**

This application provides an image encoding method, an image decoding method, and a related apparatus, to improve display effect, of an image obtained through tone mapping, in a common display device. The technical solutions are as follows.

According to a first aspect, an image encoding method is provided. The method includes:
obtaining a first image, where the first image is an image on which tone mapping needs to be performed; determining location coordinates of a plurality of sampling points of a tone mapping curve corresponding to the first image based on the first image by using an optimization equation or a deep learning network model, where the optimization equation and the deep learning network model are determined based on at least one of an image contrast, image luminance, and a human-eye-sensed contrast threshold, and the plurality of sampling points include a start point, an end point, and a plurality of key points located between the start point and the end point; and encoding the first image and the location coordinates of the plurality of sampling points into a bitstream.

In other words, in this application, the plurality of sampling points of the tone mapping curve corresponding to the first image are determined at an encoder side, location coordinates of the plurality of key points in the sampling points are determined by using the optimization equation or the deep learning network model, and the optimization equation or the deep learning network model considers a factor that affects display effect, namely, at least one of the image contrast, the image luminance, or the human-eye-sensed contrast threshold. Therefore, only a tone mapping curve constructed at a decoder side based on the plurality of sampling points can achieve best display effect of a mapped image.

The image contrast is a ratio of a maximum value to a minimum value of luminance of a region. For a sample in the image, a luminance value of the sample is image luminance corresponding to the sample. The human-eye-sensed contrast threshold is a minimum contrast, where for a pixel, when luminance of the pixel changes, a human eye can sense the minimum contrast.

It should be noted that, because essence of tone mapping is to compress a high dynamic range to a low dynamic range, the first image not only may be an HDR/SDR image, but also may be another high dynamic range image, provided that a luminance range of the first image is greater than a luminance range that may be displayed on the decoder side.

Optionally, determining the location coordinates of the plurality of sampling points of the tone mapping curve corresponding to the first image based on the first image by using the optimization equation or the deep learning network model includes: generating a target histogram based on the first image, where the target histogram includes a plurality of histogram bins, the plurality of histogram bins are obtained through division based on maximum image luminance and minimum image luminance of the first image, and a height of the histogram bin indicates a quantity of samples whose luminance is in the histogram bin in the first image; determining location coordinates of the start point and location coordinates of the end point, where the location coordinates include a horizontal coordinate and a vertical coordinate; selecting a point from each of the plurality of histogram bins as one of the plurality of key points, and using image luminance respectively corresponding to the plurality of key points as horizontal coordinates of the plurality of key points; determining target probabilities respectively corresponding to the plurality of sampling points, where a target probability corresponding to the start point and a target probability corresponding to the end point are specified probabilities, and a target probability corresponding to the key point indicates a probability that image luminance of the key point falls within a histogram bin in which the key point is located; and determining vertical coordinates of the plurality of key points based on the location coordinates of the start point, the location coordinates of the end point, the target probabilities respectively corresponding to the plurality of sampling points, and the horizontal coordinates of the plurality of key points by using the optimization equation or the deep learning network model.

In other words, there are two implementations of determining the vertical coordinates of the plurality of key points. One is determining the vertical coordinates by using the optimization equation, and the other is determining the vertical coordinates by using the deep learning network model.

Optionally, determining the vertical coordinates of the plurality of key points based on the location coordinates of the start point, the location coordinates of the end point, the target probabilities respectively corresponding to the plurality of sampling points, and the horizontal coordinates of the plurality of key points by using the optimization equation includes: determining human-eye-sensed contrast thresholds of the plurality of sampling points based on horizontal coordinates of the plurality of sampling points; and obtaining the vertical coordinates of the plurality of key points based on the location coordinates of the start point, the location coordinates of the end point, a quantity of the plurality of sampling points, the target probabilities respectively corresponding to the plurality of sampling points, the horizontal coordinates of the plurality of key points, and the human-eye-sensed contrast thresholds of the plurality of sampling points by solving the optimization equation.

Optionally, determining the vertical coordinates of the plurality of key points based on the location coordinates of the start point, the location coordinates of the end point, the target probabilities respectively corresponding to the plurality of sampling points, and the horizontal coordinates of the plurality of key points by using the deep learning network model includes: inputting the maximum image luminance, the minimum image luminance, and the target probabilities respectively corresponding to the plurality of sampling points into the deep learning network model, to obtain derivatives that are of the vertical coordinates of the plurality of key points and that are output by the deep learning network model; and determining the vertical coordinates of the plurality of key points based on the location coordinates of the start point, the location coordinates of the end point, the horizontal coordinates of the plurality of key points, and the derivatives of the vertical coordinates of the plurality of key points.

Optionally, the method further includes: obtaining a plurality of training samples, where each training sample includes maximum sample image luminance, minimum sample image luminance, target probabilities respectively corresponding to a plurality of sample sampling points, and derivatives of vertical coordinates of a plurality of sample key points, and the derivatives of the vertical coordinates of the plurality of sample key points are determined by using the optimization equation; and training an initial network model based on the plurality of training samples, to obtain the deep learning network model.

Because the training sample of the deep learning network model is determined by using the optimization equation, similar to the optimization equation, the deep learning network model can also consider at least one of the image luminance, the image contrast, and the human-eye-sensed contrast threshold, to also achieve good display effect of an image obtained through tone mapping.

Optionally, the optimization equation includes but is not limited to any one of the following equations:

$$y' = \arg\min\left[(1-\lambda)\sum_{k=1}^{N-1} p_k \left(\frac{1}{t(x_k)} - \frac{y_{k+1}-y_k}{t(x_k)\delta}\right)^2 + \lambda\sum_{k=1}^{N} p_k (y_k - x_k)^2\right];$$

or

$$y' = \arg\min\left[(1-\lambda)\sum_{k=1}^{N-1} p_k \left(|y_{k+1}-y_k| - t(x_k)|x_{k+1}-x_k|\right)^2 + \lambda\sum_{k=1}^{N} p_k (y_k - x_k)^2\right];$$

or

$$y' = \arg\min\left[(1-\lambda)\sum_{k=1}^{N-1} p_k \rho\left(y_{k+1} - y_k, t(x_k)(x_{k+1} - x_k)\right) + \lambda\sum_{k=1}^{N} p_k\left(y_k - x_k\right)^2\right].$$

Y' represents a derivative vector consisting of the derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

In the part $\arg\min\sum_{k=1}^{N-1} p_k\left(\dfrac{1}{t(x_k)} - \dfrac{y_{k+1} - y_k}{t(x_k)\delta}\right)^2$ in a 1st one of the foregoing equations, the image contrast and the human-eye-sensed contrast threshold are considered. In this part, an argmin function is used, so that a slope of a finally generated tone mapping curve is as close as possible to 1, to restore the image contrast to a largest extent. In other words, a contrast of the image obtained through tone mapping is as consistent as possible with a contrast of the first image.

In the part $\arg\min\sum_{k=1}^{N-1} p_k\left(|y_{k+1} - y_k| - t(x_k)|x_{k+1} - x_k|\right)^2$ in a 2nd one of the foregoing equations, the image contrast and the human-eye-sensed contrast threshold are considered, and a difference between a pixel gradient of the image obtained through tone mapping and a pixel gradient of a raw image is as small as possible. In other words, the image contrast is restored to a largest extent through spatial consistency.

In the part $\arg\min\sum_{k=1}^{N-1} p_k \rho\left(y_{k+1} - y_k, t(x_k)(x_{k+1} - x_k)\right)$ in a 3rd one of the foregoing equations, the image contrast and the human-eye-sensed contrast threshold are considered, and a theory of the Pearson correlation coefficient is applied. The Pearson correlation coefficient between $y_{k+1}$ - $y_k$ and $t(x_k)(x_{k+1}$ - $x_k)$ is enabled to be as small as possible, to restore the image contrast to a largest extent.

In addition, for pixels with different luminance, when the luminance of the pixel changes, the human eye can sense different minimum contrasts. Therefore, $t(x_k)$, namely, the human-eye-sensed contrast threshold corresponding to the $k^{th}$ sampling point, is added to the foregoing three equations, to improve display effect of the image. In the part

$$\arg\min\sum_{k=1}^{N} p_k\left(y_k - x_k\right)^2$$

, the image luminance is considered, and an objective is to make a luminance value of each sample in the image obtained through tone mapping consistent with a luminance value of each sample in the first image as much as possible.

In addition, the weight coefficient $\lambda$ is used to adjust proportions of two parts on a right side of an equation. A smaller value of $\lambda$ indicates that the optimization equation attaches more importance to impact of the image contrast and the human-eye-sensed contrast threshold on the image display effect than the image luminance; on the contrary, a larger value of $\lambda$ indicates that the optimization equation attaches more importance to impact of the image luminance on the image display effect. The weight coefficient is set in advance, and a specific value may be set according to an actual requirement. This is not limited in this embodiment of this application.

When the weight coefficient is set to 0, the optimization equation considers only two factors, namely, the image contrast and the human-eye-sensed contrast threshold; when the weight coefficient is set to 1, the optimization equation considers only one factor, namely, the image luminance; and when the weight coefficient is set to any value between 0 and 1, the optimization equation considers all the three factors, namely, the image contrast, the human-eye-sensed contrast threshold, and the image luminance. Certainly, when the weight coefficient is set to 0 and $t(x_k)$ is removed, the optimization equation considers only the image contrast.

According to a second aspect, an image decoding method is provided. The method includes:
obtaining a reconstructed image based on a bitstream; parsing out location coordinates of a plurality of sampling points from the bitstream, where the location coordinates of the plurality of sampling points are determined by using an optimization equation or a deep learning network model, the optimization equation and the deep learning network model are determined based on at least one of an image contrast, image luminance, and a human-eye-sensed contrast threshold, and the plurality of sampling points include a start point, an end point, and a plurality of key points located between the start point and the end point; obtaining a tone mapping curve based on the location coordinates of the plurality of sampling points; and performing tone mapping on the reconstructed image based on the tone mapping curve, maximum screen luminance, and minimum screen luminance.

The reconstructed image is an image constructed based on first image data in the bitstream, the maximum screen luminance is a maximum luminance value that may be displayed on a decoder side, and the minimum screen luminance is a minimum luminance value that may be displayed on the decoder side.

When the decoder side establishes the tone mapping curve, location coordinates of the plurality of key points are determined by using the optimization equation or the deep learning network model, and the optimization equation or the deep learning network model considers at least one of the image contrast, the image luminance, and the human-eye-sensed contrast threshold, so that luminance and a contrast of an image can be kept consistent with those of the first image to a largest extent, and a human eye can sense a luminance difference in a case of different image luminance, thereby sensing more details of an image obtained through tone mapping. Therefore, better display effect can be achieved after the image is mapped based on the tone mapping curve.

Optionally, the tone mapping curve is determined in a curve fitting manner, and the curve fitting manner includes but is not limited to a straight line connection manner, a cubic spline connection manner, and a polynomial fitting manner.

Optionally, the optimization equation includes but is not limited to any one of the following equations:

$$y' = \arg\min\left[ (1-\lambda)\sum_{k=1}^{N-1} p_k \left( \frac{1}{t(x_k)} - \frac{y_{k+1}-y_k}{t(x_k)\delta} \right)^2 + \lambda \sum_{k=1}^{N} p_k (y_k - x_k)^2 \right];$$

or

$$y' = \arg\min\left[ (1-\lambda)\sum_{k=1}^{N-1} p_k \left( |y_{k+1}-y_k| - t(x_k)|x_{k+1}-x_k| \right)^2 + \lambda \sum_{k=1}^{N} p_k (y_k - x_k)^2 \right];$$

or

$$y' = \arg\min\left[ (1-\lambda)\sum_{k=1}^{N-1} p_k \rho\left( y_{k+1}-y_k, t(x_k)(x_{k+1}-x_k) \right) + \lambda \sum_{k=1}^{N} p_k (y_k - x_k)^2 \right].$$

$y'$ represents a derivative vector consisting of derivatives of vertical coordinates of the plurality of key points, $N$ represents a quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

In the part $\arg\min\sum_{k=1}^{N-1} p_k \left( \frac{1}{t(x_k)} - \frac{y_{k+1}-y_k}{t(x_k)\delta} \right)^2$ in a 1st one of the foregoing equations, the image contrast and the human-eye-sensed contrast threshold are considered. In this part, an argmin function is used, so that a slope of a finally generated tone mapping curve is as close as possible to 1, to restore the image contrast to a largest extent. In other words, a contrast of the image obtained through tone mapping is as consistent as possible with a contrast of the first image.

In the part $\arg\min\sum_{k=1}^{N-1} p_k \left( |y_{k+1}-y_k| - t(x_k)|x_{k+1}-x_k| \right)^2$ in a 2nd one of the foregoing equations, the image contrast and the human-eye-sensed contrast threshold are considered, and a difference between a pixel gradient of the image obtained through tone mapping and a pixel gradient of a raw image is as small as possible. In other words, the image contrast is restored to a largest extent through spatial consistency.

In the part arg min $\arg\min \sum_{k=1}^{N-1} p_k \rho\left(y_{k+1} - y_k, t\left(x_k\right)\left(x_{k+1} - x_k\right)\right)$ in a 3rd one of the foregoing equations, the image contrast and the human-eye-sensed contrast threshold are considered, and a theory of the Pearson correlation coefficient is applied. The Pearson correlation coefficient between $y_{k+1} - y_k$ and $t(x_k)(x_{k+1} - x_k)$ is enabled to be as small as possible, to restore the image contrast to a largest extent.

In addition, for pixels with different luminance, when the luminance of the pixel changes, the human eye can sense different minimum contrasts. Therefore, $t(x_k)$, namely, the human-eye-sensed contrast threshold corresponding to the $k^{th}$ sampling point, is added to the foregoing three equations, to improve display effect of the image. In the part

$$\arg\min \sum_{k=1}^{N} p_k \left(y_k - x_k\right)^2$$

, the image luminance is considered, and an objective is to make a luminance value of each sample in the image obtained through tone mapping consistent with a luminance value of each sample in the first image as much as possible.

In addition, the weight coefficient $\lambda$ is used to adjust proportions of two parts on a right side of an equation. A smaller value of $\lambda$ indicates that the optimization equation attaches more importance to impact of the image contrast and the human-eye-sensed contrast threshold on the image display effect than the image luminance; on the contrary, a larger value of $\lambda$ indicates that the optimization equation attaches more importance to impact of the image luminance on the image display effect. The weight coefficient is set in advance, and a specific value may be set according to an actual requirement. This is not limited in this embodiment of this application.

When the weight coefficient is set to 0, the optimization equation considers only two factors, namely, the image contrast and the human-eye-sensed contrast threshold; when the weight coefficient is set to 1, the optimization equation considers only one factor, namely, the image luminance; and when the weight coefficient is set to any value between 0 and 1, the optimization equation considers all the three factors, namely, the image contrast, the human-eye-sensed contrast threshold, and the image luminance. Certainly, when the weight coefficient is set to 0 and $t(x_k)$ is removed, the optimization equation considers only the image contrast.

According to a third aspect, an image encoding apparatus is provided. The apparatus has a function of implementing a behavior of the image encoding method according to the first aspect. The image encoding apparatus includes at least one module. The at least one module is configured to implement the image encoding method provided in the first aspect.

According to a fourth aspect, an image decoding apparatus is provided. The apparatus has a function of implementing a behavior of the image decoding method according to the second aspect. The image decoding apparatus includes at least one module. The at least one module is configured to implement the image decoding method provided in the second aspect.

According to a fifth aspect, an encoder side device is provided. The encoder side device includes a processor and a memory, and the memory is configured to store a computer program for performing the image encoding method provided in the first aspect. The processor is configured to execute the computer program stored in the memory, to implement the image encoding method according to the first aspect.

Optionally, the encoder side device may further include a communication bus. The communication bus is configured to establish a connection between the processor and the memory.

According to a sixth aspect, a decoder side device is provided. The decoder side device includes a processor and a memory, and the memory is configured to store a computer program for performing the image decoding method provided in the first aspect. The processor is configured to execute the computer program stored in the memory, to implement the image decoding method according to the second aspect.

Optionally, the decoder side device may further include a communication bus. The communication bus is configured to establish a connection between the processor and the memory.

According to a seventh aspect, a computer-readable storage medium is provided. The storage medium stores instructions. When the instructions run on a computer, the computer is enabled to perform the steps of the image encoding method according to the first aspect or the steps of the image decoding method according to the second aspect.

According to an eighth aspect, a computer program product including instructions is provided. When the instructions run on a computer, the computer is enabled to perform the steps of the image encoding method according to the first aspect or the steps of the image decoding method according to the second aspect. In other words, a computer program is provided. When the computer program runs on a computer, the computer is enabled to perform the steps of the image encoding method according to the first aspect or the steps of the image decoding method according to the second aspect.

Technical effects achieved in the third aspect, the fourth aspect, the fifth aspect, the sixth aspect, the seventh aspect, and the eighth aspect are similar to technical effects achieved through corresponding technical means in the first aspect or the second aspect, and details are not described herein again.

## BRIEF DESCRIPTION OF DRAWINGS

FIG. 1 is a diagram of an implementation environment according to an embodiment of this application;

FIG. 2 is a flowchart of an image encoding method according to an embodiment of this application;

FIG. 3 is a flowchart of a method for determining location coordinates of a plurality of sampling points according to an embodiment of this application;

FIG. 4 is a diagram of a target histogram and a process of constructing a tone mapping curve according to an embodiment of this application;

FIG. 5 is a diagram of a process of determining vertical coordinates of a plurality of key points by using a deep learning network model according to an embodiment of this application;

FIG. 6 is a flowchart of an image decoding method according to an embodiment of this application;

FIG. 7 is a diagram of another process of constructing a tone mapping curve according to an embodiment of this application;

FIG. 8 is a diagram of a structure of an image encoding apparatus according to an embodiment of this application; and

FIG. 9 is a diagram of a structure of an image decoding apparatus according to an embodiment of this application.

## DESCRIPTION OF EMBODIMENTS

To make objectives, technical solutions, and advantages of embodiments of this application clearer, the following further describes implementations of this application in detail with reference to the accompanying drawings.

Before an image encoding method and an image decoding method provided in embodiments of this application are described in detail, an application scenario and an implementation environment in embodiments of this application are first described.

First, the application scenario in embodiments of this application is described.

A natural scene has an extremely wide range of colors and a wide luminance range. Usually, maximum luminance is close to $10^6$ cd/m$^2$, and minimum luminance is close to $10^{(-3)}$ cd/m$^2$. A human visual system can perform automatic adjustment, to adapt to a luminance change within a range of nearly 10 orders of magnitude. However, an image generated by a digital camera has only a limited dynamic range. To restore a real world as much as possible, a larger dynamic range needs to be captured, which promotes rapid development of an HDR imaging technology. The HDR image is stored in a floating-point format, and has a very large dynamic range. However, a common display device usually has only 8 bits, and has a very limited dynamic range. Therefore, to enable the HDR image to be normally displayed in a common display device, the dynamic range of the HDR image needs to be compressed to the dynamic range of the display device. This process is referred to as tone mapping.

In a related technology, a tone mapping method is usually to align maximum image luminance and minimum image luminance of an image with a maximum screen luminance value and a minimum screen luminance of a display, and for image luminance between the maximum image luminance and the minimum image luminance, global or local mapping is performed based on a tone mapping curve, to map the image luminance to a range between the maximum screen luminance and the minimum screen luminance. However, a currently commonly used tone mapping curve does not consider impact of an image contrast on display effect. Consequently, optimal display effect of a raw image cannot be achieved. For example, a tone mapping curve such as a Dolby sigmoidal curve or a Bezier curve causes a loss of details of a mapped image and a low local contrast, resulting in distortion of the mapped image. In addition, the commonly used tone mapping curve does not consider a factor of sense of a human eye either. Consequently, the mapped image visually differs greatly from an actual scene.

Based on this, in embodiments of this application, an optimization equation or a deep learning model is established based on at least one of an image contrast, image luminance, and a human-eye-sensed contrast threshold, and an image on which tone mapping needs to be performed is encoded by using the optimization equation or the deep learning model. In this way, a decoder side establishes a tone mapping curve based on a bitstream to implement tone mapping of the image. In this way, corresponding tone mapping curves of a same HDR image for different display devices can be obtained, an image obtained through tone mapping and an HDR image before tone mapping have as consistent contrasts and luminance as possible, and image display effect sensed by a human eye is improved.

Then, the implementation environment in embodiments of this application are described.

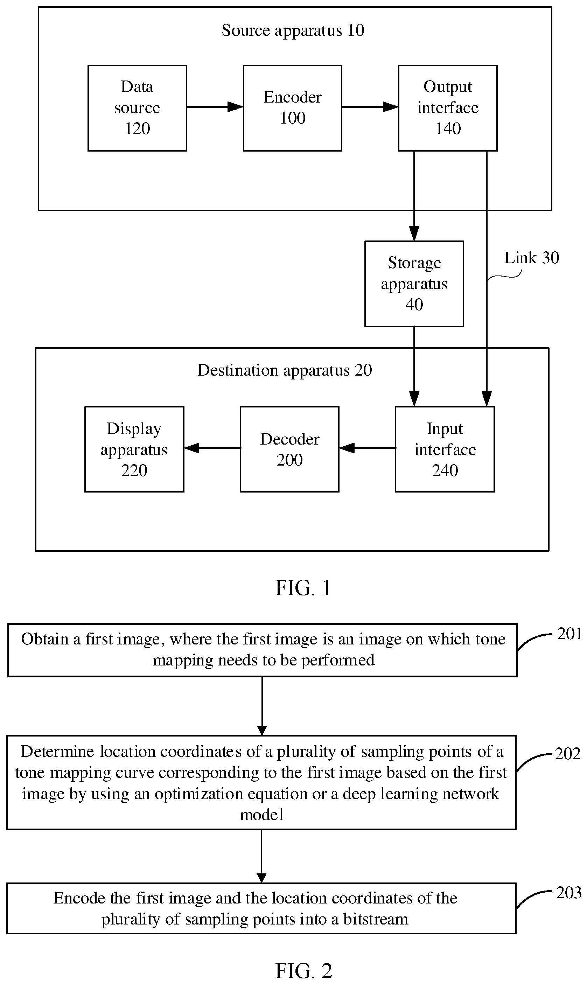

FIG. 1 is a diagram of an implementation environment according to an embodiment of this application. The implementation environment includes a source apparatus 10, a destination apparatus 20, a link 30, and a storage apparatus 40. The source apparatus 10 may generate an encoded image. Therefore, the source apparatus 10 may also be referred to as an image encoding apparatus or an encoder side. The destination apparatus 20 may decode the encoded image generated by the source apparatus 10. Therefore, the destination apparatus 20 may also be referred to as an image decoding apparatus or a decoder side. The link 30 may receive the encoded image generated by the source apparatus 10, and may transmit the encoded image to the destination apparatus 20. The storage apparatus 40 may receive the encoded image generated by the source apparatus 10, and may store the encoded image. In this case, the destination apparatus 20 may directly obtain the encoded image from the storage apparatus 40. Alternatively, the storage apparatus 40 may correspond to a file server or another intermediate storage apparatus that can store the encoded image generated by the source apparatus 10. In this case, the destination apparatus 20 may transmit, in a streaming manner, or download the encoded image stored on the storage apparatus 40.

The source apparatus 10 and the destination apparatus 20 each may include one or more processors and a memory coupled to the one or more processors. The memory may include a random access memory (random access memory, RAM), a read-only memory (read-only memory, ROM), an electrically erasable programmable read-only memory (electrically erasable programmable read-only memory, EEPROM), a flash memory, any other medium that can be configured to store required program code in a form of instructions or data structures accessible to a computer, or the like. For example, the source apparatus 10 and the destination apparatus 20 each may include a mobile phone, a smartphone, a personal digital assistant (personal digital assistant, PDA), a wearable device, a palmtop computer PPC (pocket PC), a tablet computer, a smart in-vehicle infotainment system, a smart television, a smart sound box, a desktop computer, a mobile computing apparatus, a notebook (for example, a laptop) computer, a tablet computer, a set-top box, a telephone handheld such as a so-called "smart" phone, a television, a camera, a display apparatus, a digital media player, a video game console, a vehicle-mounted computer, or the like.

The link 30 may include one or more media or apparatuses that can transmit the encoded image from the source apparatus 10 to the destination apparatus 20. In a possible implementation, the link 30 may include one or more communication media that can enable the source apparatus 10 to directly send the encoded image to the destination apparatus 20 in real time. In this embodiment of this application, the source apparatus 10 may modulate the encoded image based on a communication standard. The communication standard may be a wireless communication protocol, or the like; and may send a modulated image to the destination apparatus 20. The one or more communication media may include a wireless communication medium and/or a wired communication medium. For example, the one or more communication media may include a radio frequency (radio frequency, RF) spectrum or one or more physical transmission lines. The one or more communication media may be a part of a packet-based network. The packet-based network may be a local area network, a wide area network, a global network (for example, the Internet), or the like. The one or more communication media may include a router, a switch, a base station, another device that facilitates communication from the source apparatus 10 to the destination apparatus 20, or the like. This is not specifically limited in this embodiment of this application.

In a possible implementation, the storage apparatus 40 may store the received encoded image sent by the source apparatus 10, and the destination apparatus 20 may directly obtain the encoded image from the storage apparatus 40. In this case, the storage apparatus 40 may include any one of a plurality of types of distributed or locally accessed data storage media. For example, the any one of the plurality of types of distributed or locally accessed data storage media may be a hard disk drive, a Blu-ray disc, a digital versatile disc (digital versatile disc, DVD), a compact disc read-only memory (compact disc read-only memory, CD-ROM), a flash memory, a volatile or non-volatile memory, or any other appropriate digital storage medium for storing the encoded image.

In a possible implementation, the storage apparatus 40 may correspond to the file server or the another intermediate storage apparatus that can store the encoded image generated by the source apparatus 10, and the destination apparatus 20 may transmit, in the streaming manner, or download the image stored on the storage apparatus 40. The file server may be any type of server that can store the encoded image and send the encoded image to the destination apparatus 20. In a possible implementation, the file server may include a network server, a file transfer protocol (file transfer protocol, FTP) server, a network attached storage (network attached storage, NAS) apparatus, a local disk drive, or the like. The destination apparatus 20 may obtain the encoded image through any standard data connection (including an Internet connection). The any standard data connection may include a wireless channel (for example, a Wi-Fi connection), a wired connection (for example, a digital subscriber line (digital subscriber line, DSL) or a cable modem), or a combination of a wireless channel and a wired connection suitable for obtaining the encoded image stored on the file server. Transmission of the encoded image from the storage apparatus 40 may be streaming transmission, download transmission, or a combination thereof.

The implementation environment shown in FIG. 1 is merely a possible implementation. In addition, technologies in embodiments of this application are not only applicable to the source apparatus 10 that can encode an image and the destination apparatus 20 that can decode the encoded image that are shown in FIG. 1, but also applicable to another apparatus that can encode an image and another apparatus that can decode the encoded image. This is not specifically limited in embodiments of this application.

In the implementation environment shown in FIG. 1, the source apparatus 10 includes a data source 120, an encoder 100, and an output interface 140. In some embodiments, the output interface 140 may include a modulator/demodulator (modem) and/or a transmitter. The transmitter may also be referred to as an emitter. The data source 120 may include an image capture apparatus (for example, a camera), an archive including a previously captured image, a feed-in interface for receiving an image from an image content provider, and/or a computer graphics system for generating an image, or a combination of these sources of images.

The data source 120 may send the image to the encoder 100, and the encoder 100 may encode the received image sent by the data source 120 to obtain the encoded image. The encoder may send the encoded image to the output interface. In some embodiments, the source apparatus 10 directly sends the encoded image to the destination apparatus 20 through the output interface 140. In another embodiment, the encoded image may alternatively be stored in the storage apparatus 40, so that the destination apparatus 20 subsequently obtains the encoded image for decoding and/or display.

In the implementation environment shown in FIG. 1, the destination apparatus 20 includes an input interface 240, a decoder 200, and a display apparatus 220. In some embodiments, the input interface 240 includes a receiver and/or a modem. The input interface 240 may receive the encoded image through the link 30 and/or from the storage apparatus 40, and then send the encoded image to the decoder 200. The decoder 200 may decode the received encoded image to obtain a decoded image. The decoder may send the decoded image to the display apparatus 220. The display apparatus 220 may be integrated with the destination apparatus 20 or disposed outside the destination apparatus 20. Usually, the display apparatus 220 displays the decoded image. The display apparatus 220 may be a display apparatus of any one of a plurality of types. For example, the display apparatus 220 may be a liquid crystal display (liquid crystal display, LCD), a plasma display, an organic light-emitting diode (organic light-emitting diode, OLED) display, or another type of display apparatus.

Although not shown in FIG. 1, in some aspects, the encoder 100 and the decoder 200 may be integrated with an encoder and a decoder respectively, and may include an appropriate multiplexer-demultiplexer (multiplexer-demultiplexer, MUX-DEMUX) unit or other hardware and software for encoding both audio and a video in a common data stream or a separate data stream. In some embodiments, if applicable, the MUX-DEMUX unit may comply with the ITU H.223 multiplexer protocol or another protocol like the user datagram protocol (user datagram protocol, UDP).

The encoder 100 and the decoder 200 each may be any one of the following circuits: one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, or any combination thereof. If technologies in embodiments of this application are partially implemented in software, an apparatus may store instructions for the software in an appropriate non-volatile computer-readable storage medium, and may execute the instructions in hardware through one or more processors, to implement technologies in embodiments of this application. Any one of the foregoing content (including hardware, software, a combination of hardware and software, and the like) may be considered as one or more processors. The encoder 100 and the decoder 200 each may be included in one or more encoders or decoders. Either the encoder or the decoder may be integrated as a part of a combined encoder/decoder (codec) in a corresponding apparatus.

In this embodiment of this application, the encoder 100 may be usually referred to as "signaling" or "sending" some information to another apparatus, for example, the decoder 200. The term "signaling" or "sending" may usually be transmission of syntax elements and/or other data used to decode a compressed image. Such transmission may occur in real time or almost in real time. Alternatively, such communication may occur after a period of time, for example, may occur when a syntax element in an encoded bitstream is stored in a computer-readable storage medium during encoding. The decoding apparatus may then retrieve the syntax element at any time after the syntax element is stored in the medium.

It should be noted that the application scenario and the implementation environment described in embodiments of this application are intended to describe the technical solutions in embodiments of this application more clearly, but constitute no limitation on the technical solutions provided in embodiments of this application. A person of ordinary skill in the art may learn that, with evolution of the application scenario and the implementation environment, the technical solutions provided in embodiments of this application are also applicable to a similar technical problem.

The following describes in detail the image encoding method and the image decoding method provided in embodiments of this application.

FIG. 2 is a flowchart of an image encoding method according to an embodiment of this application. The method may be applied to a source apparatus in the foregoing implementation environment, and the source apparatus is also referred to as an encoder side. As shown in FIG. 2, the method includes the following steps.

**Step 201:** Obtain a first image, where the first image is an image on which tone mapping needs to be performed.

The first image may be an image obtained from an HDR/standard dynamic range (standard dynamic range, SDR) video stream, or may be an image obtained from an HDR/SDR image source, or may be an image from another source. The first image may be in an RGB color space format, a YUV color space format, or any other color space format. A source and a color space format of the first image are not limited in this embodiment of this application.

Because essence of tone mapping is to compress a high dynamic range to a low dynamic range, the first image not only may be an HDR/SDR image, but also may be another high dynamic range image, provided that a luminance range of the first image is greater than a luminance range that may be displayed on a decoder side.

**Step 202:** Determine location coordinates of a plurality of sampling points of a tone mapping curve corresponding to the first image based on the first image by using an optimization equation or a deep learning network model, where the optimization equation and the deep learning network model are determined based on at least one of an image contrast, image luminance, and a human-eye-sensed contrast threshold, and the plurality of sampling points include a start point, an end point, and a plurality of key points located between the start point and the end point.

The image contrast is a ratio of a maximum value to a minimum value of luminance of a region. For a sample in the image, a luminance value of the sample is image luminance corresponding to the sample. The human-eye-sensed contrast threshold is a minimum contrast, where for a pixel, when luminance of the pixel changes, a human eye can sense the minimum contrast.

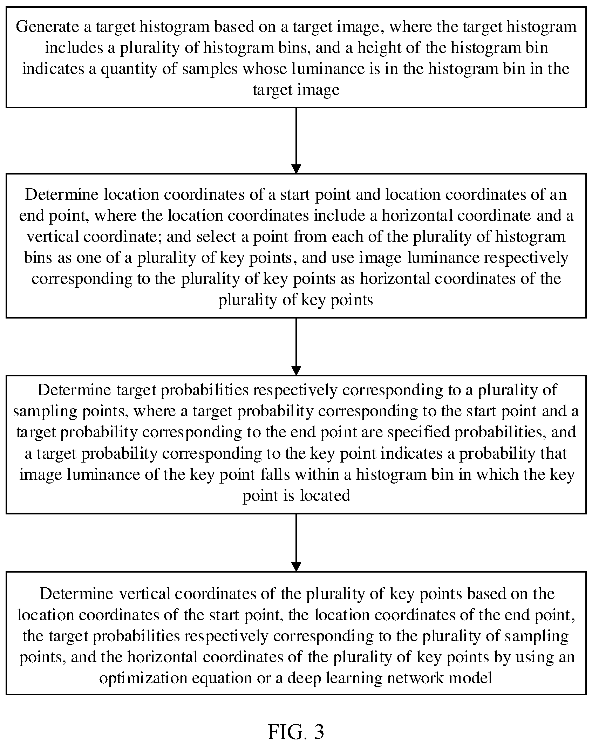

In some embodiments, as shown in FIG. 3, the location coordinates of the plurality of sampling points of the tone mapping curve corresponding to the first image are determined based on the first image by using the optimization equation or the deep learning network model in steps (1) to (4).

(1) Generate a target histogram based on the first image, where the target histogram includes a plurality of histogram bins, the plurality of histogram bins are obtained through division based on maximum image luminance and minimum image luminance of the first image, and a height of the histogram bin indicates a quantity of samples whose luminance is in the histogram bin in the first image.

In some embodiments, a luminance value of each sample in the first image is obtained, a largest luminance value is used as the maximum image luminance, and a minimum luminance value is used as the minimum image luminance; a difference between the maximum image luminance and the minimum image luminance is divided by a specified bin quantity, to obtain a width of each histogram bin, and a luminance range included in each histogram bin is determined; and a quantity of samples whose luminance is in each histogram bin in the first image is counted, and the quantity is used as a height of each histogram bin.

The specified bin quantity is set in advance. A larger quantity indicates a more precise tone mapping curve and higher system complexity. In actual applications, the quantity may be properly set according to a requirement. This is not limited in this embodiment of this application.

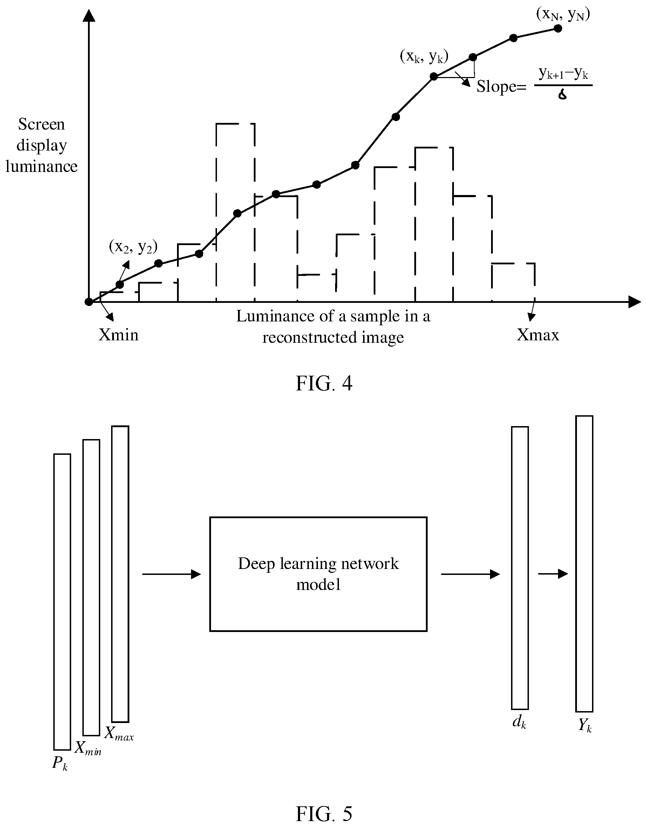

For example, as shown in FIG. 4, if the maximum image luminance of the first image is Xmax, the minimum image luminance is Xmin, and the specified bin quantity is M, the generated target histogram is shown by a dashed line part in FIG. 4, a width of each histogram bin is (Xmax-Xmin)/M, a start point of a 1st histogram bin is Xmin, and an end point of a last histogram bin is Xmax.

(2) Determine location coordinates of the start point and location coordinates of the end point, where the location coordinates include a horizontal coordinate and a vertical coordinate; and select a point from each of the plurality of histogram bins as one of the plurality of key points, and use image luminance respectively corresponding to the plurality of key points as horizontal coordinates of the plurality of key points.

In some embodiments, the location coordinates of the start point and the location coordinates of the end point are specified default coordinates. The default coordinates are set through historical statistical data. To be specific, a horizontal coordinate of the start point may be set as the minimum luminance value of the image on which tone mapping needs to be performed in the historical statistical data; a vertical coordinate of the start point may be set as a minimum luminance value that can be displayed on the decoder side in the historical statistical data; a horizontal coordinate of the end point may be set as the maximum luminance value of the image on which tone mapping needs to be performed in the historical statistical data; and a vertical coordinate of the end point may be set as a maximum luminance value that can be displayed on the decoder side in the historical statistical data. Certainly, a person skilled in the art may further set the horizontal/vertical coordinate of the start point/end point based on subjective experience. A value of the horizontal/vertical coordinate of the start point/end point is not limited in this embodiment of this application.

In some other embodiments, the location coordinates of the start point and the location coordinates of the end point are determined based on a first selection bin, a second selection bin, minimum reference luminance, and maximum reference luminance. To be specific, a horizontal coordinate of the start point may be set as a horizontal coordinate of any point in the first selection bin; a horizontal coordinate of the end point may be set as a horizontal coordinate of any point in the second selection bin; a vertical coordinate of the start point may be set as any luminance value within an approximate fluctuation range of the minimum reference luminance, and the luminance value is greater than 0; and a vertical coordinate of the end point may be set as any luminance value within an approximate fluctuation range of the maximum reference luminance.

The first selection bin is a bin from 0 to a right endpoint of the 1st histogram bin, and is a fully closed bin. The second selection bin is a bin from a left endpoint of the last histogram bin to a positive infinity, and is a left-closed right-open bin. A horizontal coordinate of a right endpoint of the 1st histogram bin is a sum of the minimum image luminance and the width of the histogram bin. A horizontal coordinate of a left endpoint of the last histogram bin is a difference between the maximum image luminance and the width of the histogram bin.

The minimum reference luminance is a minimum luminance value that can be displayed on a reference decoder side, and the maximum reference luminance is a maximum luminance value that can be displayed on the reference decoder side. The reference decoder side is any decoder side. In other words, in this embodiment of this application, the vertical coordinate of the start point and the vertical coordinate of the end point are determined by setting the minimum reference luminance and the maximum reference luminance in advance. In addition, the approximate fluctuation range of the minimum reference luminance and the approximate fluctuation range of the maximum reference luminance are also set in advance, and indicate a small fluctuation range around the minimum reference luminance and a small fluctuation range around the maximum reference luminance. In addition, the approximate fluctuation range of the minimum reference luminance may be the same as or different from the approximate fluctuation range of the maximum reference luminance. This is not limited in this embodiment of this application.

In some embodiments, the plurality of key points are determined based on a specified rule. The specified rule is set in advance. The specified rule may be that a midpoint of the histogram bin is used as a key point, or may be that a left endpoint or a right endpoint of the histogram bin is used as a key point, or may be another rule. This is not limited in this embodiment of this application, provided that the plurality of key points are selected in a same manner.

Based on the foregoing descriptions, the horizontal coordinate of the start point may be located outside the 1st histogram bin, or may be located within the 1st histogram bin. If the horizontal coordinate of the start point is outside the 1st histogram bin, a point may be selected from the 1st histogram bin as a key point; or if the horizontal coordinate of the start point is within the 1st histogram bin, no key point is selected from the 1st histogram bin; or a key point is selected from the 1st histogram bin, but a horizontal coordinate of the key point is greater than the horizontal coordinate of the start point.

Similarly, based on the foregoing descriptions, the horizontal coordinate of the end point may be located outside the last histogram bin, or may be located within the last histogram bin. If the horizontal coordinate of the end point is outside the last histogram bin, a point may be selected from the last histogram bin as a key point; or if the horizontal coordinate of the end point is within the last histogram bin, no key point is selected from the last histogram bin; or a key point is selected from the last histogram bin, but a horizontal coordinate of the key point is less than the horizontal coordinate of the end point.

(3) Determine target probabilities respectively corresponding to the plurality of sampling points, where a target probability corresponding to the start point and a target probability corresponding to the end point are specified probabilities, and a target probability corresponding to the key point indicates a probability that image luminance of the key point falls within a histogram bin in which the key point is located.

The specified probability is set in advance, and may be 0; or may be any decimal in a very small range greater than 0. For example, the specified probability may be 0.01, 0.001, or 0.0001. This is not limited in this embodiment of this application.

In some embodiments, a manner of determining the target probability corresponding to the key point may be: determining a sum of heights of all histogram bins, to obtain a total bin height; and determining a ratio of a height of a histogram bin in which a first key point is located to the total bin height, using the ratio as a target probability corresponding to the first key point, and obtaining a target probability corresponding to another key point in a same manner. The first key point is any one of the plurality of key points.

(4) Determine vertical coordinates of the plurality of key points based on the location coordinates of the start point, the location coordinates of the end point, the target probabilities respectively corresponding to the plurality of sampling points, and the horizontal coordinates of the plurality of key points by using the optimization equation or the deep learning network model.

In some embodiments, manners of determining the vertical coordinates of the plurality of key points by using the optimization equation or the deep learning network model are different. The following separately describes the manners.

**In a first implementation,** the vertical coordinates of the plurality of key points are determined by using the optimization equation. To be specific, human-eye-sensed contrast thresholds of the plurality of sampling points are determined based on horizontal coordinates of the plurality of sampling points. The vertical coordinates of the plurality of key points are obtained based on the location coordinates of the start point, the location coordinates of the end point, a quantity of the plurality of sampling points, the target probabilities respectively corresponding to the plurality of sampling points, the horizontal coordinates of the plurality of key points, and the human-eye-sensed contrast thresholds of the plurality of sampling points by solving the optimization equation.

In some embodiments, the encoder side stores a human-eye-sensed contrast curve, which indicates human-eye-sensed contrast thresholds corresponding to samples with different luminance. A horizontal axis of the curve is luminance, and a vertical axis is the human-eye-sensed contrast threshold. After a horizontal coordinate of a first sampling point is determined, a vertical coordinate corresponding to the horizontal coordinate of the first sampling point may be searched for on the curve, and the vertical coordinate is a human-eye-sensed contrast threshold of the first sampling point. Human-eye-sensed contrast thresholds respectively corresponding to a plurality of other sampling points may be determined in a same manner. The first sampling point is any one of the plurality of sampling points.

The optimization equation includes but is not limited to any one of the following equations (1) to (3):

$$y' = \arg\min\left[ (1-\lambda)\sum_{k=1}^{N-1} p_k \left( \frac{1}{t(x_k)} - \frac{y_{k+1} - y_k}{t(x_k)\delta} \right)^2 + \lambda \sum_{k=1}^{N} p_k \left( y_k - x_k \right)^2 \right]$$

(1)

$$y' = \arg\min\left[ (1-\lambda)\sum_{k=1}^{N-1} p_k \left( |y_{k+1} - y_k| - t(x_k)|x_{k+1} - x_k| \right)^2 + \lambda \sum_{k=1}^{N} p_k \left( y_k - x_k \right)^2 \right]$$

(2)

$$y' = \arg\min\left[ (1-\lambda)\sum_{k=1}^{N-1} p_k \rho\left( y_{k+1} - y_k, t(x_k)(x_{k+1} - x_k) \right) + \lambda \sum_{k=1}^{N} p_k \left( y_k - x_k \right)^2 \right]$$

(3)

In the equation (1), $y'$ represents a derivative vector consisting of derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents the width of the histogram bin, widths of all histogram bins are equal, and $\lambda$ represents a weight coefficient.

In the part $\arg\min\sum_{k=1}^{N-1} p_k \left( \frac{1}{t(x_k)} - \frac{y_{k+1} - y_k}{t(x_k)\delta} \right)^2$ in the equation (1), the image contrast and the human-eye-sensed contrast threshold are considered. Herein, $\frac{y_{k+1} - y_k}{\delta}$ represents a slope (referring to $slope = \frac{y_{k+1} - y_k}{\delta}$ marked in FIG. 4) of a curve segment between two adjacent sampling points in the tone mapping curve, and an objective of performing an accumulation operation is comprehensively considering a slope of the entire curve. In this part, an argmin function is used, so that a slope of a finally generated tone mapping curve is as close as possible to 1, to restore the image contrast to a largest extent. In other words, a contrast of the image obtained through tone mapping is as consistent as possible with a contrast of the first image. In addition, for pixels with different luminance, when the luminance of the pixel changes, the human eye can sense different minimum contrasts. Therefore, $t(x_k)$, namely, the human-eye-sensed contrast threshold corresponding to the $k^{th}$ sampling point, is added, to improve display effect of the image.

In the part $\arg\min\sum_{k=1}^{N} p_k \left( y_k - x_k \right)^2$ , the image luminance is considered, and an objective is to make a luminance value of each sample in the image obtained through tone mapping consistent with a luminance value of each sample in the first image as much as possible.

In the equation (2), meanings represented by $y'$, $N-1$, $k$, $p_k$, $x_k$, $t(x_k)$, $y_k$, $y_{k+1}$, and $\lambda$ are the same as meanings in the equation (1).

The part $\arg\min \sum_{k=1}^{N} p_k \left( y_k - x_k \right)^2$ in the equation (2) is the same as that in the equation (1). In the equation (2), a part in which the image contrast and the human-eye-sensed contrast threshold are considered is

$$\arg\min \sum_{k=1}^{N-1} p_k \left( \mid y_{k+1} - y_k \mid - t\left( x_k \right) \mid x_{k+1} - x_k \mid \right)^2$$ , and a difference between a pixel gradient of the image obtained through tone mapping and a pixel gradient of a raw image is as small as possible. In other words, the image contrast is restored to a largest extent through spatial consistency. In addition, the same as the equation (1), $t(x_k)$ is added to improve the display effect of the image.

In the equation (3), meanings represented by $y'$, $N$-1, $k$, $p_k$, $x_k$, $tx_k$), $y_k$, $y_{k+1}$, and $\lambda$ are the same as meanings in the equation (1), and P represents a Pearson correlation coefficient. Therefore, the equation (3) may also be expressed as follows:

$$y' = \arg\min \left[ \left( 1 - \lambda \right) \sum_{k=1}^{N-1} p_k \left( \frac{1}{N-1} \sum_{P_I, P_J} \frac{COV\left( P_I, P_J \right)}{\sigma\left( P_I \right)\sigma\left( P_J \right)} \right) + \lambda \sum_{k=1}^{N} p_k \left( y_k - x_k \right)^2 \right].$$

Herein, $P_I$ indicates $Y_{k+1}$-$Y_k$, and $P$, $t(x_k)(x_{k+1}$-$x_k)$.

The part $\arg\min \sum_{k=1}^{N} p_k \left( y_k - x_k \right)^2$ in the equation (3) is also the same as that in the equation (1). However, in the equation (3), a part in which the image contrast and the human-eye-sensed contrast threshold are considered is $\arg\min \sum_{k=1}^{N-1} p_k \rho \left( y_{k+1} - y_k, t\left( x_k \right)\left( x_{k+1} - x_k \right) \right)$ , and a theory of the Pearson correlation coefficient is applied. The Pearson correlation coefficient between $y_{k+1}$ - $y_k$ and $t(x_k)(x_{k+1}$ - $x_k)$ is enabled to be as small as possible, to restore the image contrast to a largest extent. In addition, the same as the equation (1), $t(x_k)$ is added to improve the display effect of the image.

In addition, the weight coefficient $\lambda$ in the equations (1) to (3) is used to adjust proportions of two parts on a right side of an equation. A smaller value of $\lambda$ indicates that the optimization equation attaches more importance to impact of the image contrast and the human-eye-sensed contrast threshold on the image display effect than the image luminance; on the contrary, a larger value of $\lambda$ indicates that the optimization equation attaches more importance to impact of the image luminance on the image display effect. The weight coefficient is set in advance, and a specific value may be set according to an actual requirement. This is not limited in this embodiment of this application.

When the weight coefficient is set to 0, the optimization equation considers only two factors, namely, the image contrast and the human-eye-sensed threshold; when the weight coefficient is set to 1, the optimization equation considers only one factor, namely, the image luminance; and when the weight coefficient is set to any value between 0 and 1, the optimization equation considers all the three factors, namely, the image contrast, the human-eye-sensed threshold, and the image luminance. Certainly, when the weight coefficient is set to 0 and $t(x_k)$ is removed, the optimization equation considers only the image contrast.

In a process of solving the vertical coordinate of the key point, the optimization equation needs to be solved simultaneously with $y_{k+1} = y_k + y_{k+1}'(x_{k+1} - x_k)$ and $y_{k+1} \geq y_k$. Herein, $y_k$ represents the vertical coordinate of the $k^{th}$ sampling point, $y_{k+1}$ represents the vertical coordinate of the (k+1)$^{th}$ sampling point, $y_{k+1}'$ represents a derivative of a vertical coordinate of the (k+1)$^{th}$ sampling point, $x_k$ represents a horizontal coordinate of the $k^{th}$ sampling point, and $x_{k+1}$ represents a horizontal coordinate of the (k+1)$^{th}$ sampling point.

$y_{k+1} \geq y_k$ can ensure monotonicity of the finally generated tone mapping curve. In a calculation process, an optimal solution that satisfies the optimization equation and $y_{k+1} \geq y_k$ is obtained in a step-by-step approximation manner, including the derivatives of the vertical coordinates of the plurality of key points and the vertical coordinates of the plurality of key points.

**In a second implementation,** the vertical coordinates of the plurality of key points are determined by using the deep learning network model. To be specific, the maximum image luminance, the minimum image luminance, and the target probabilities respectively corresponding to the plurality of sampling points are input into the deep learning network model, to obtain derivatives that are of the vertical coordinates of the plurality of key points and that are output by the deep learning network model. The vertical coordinates of the plurality of key points are determined based on the location coordinates of the start point, the location coordinates of the end point, the horizontal coordinates of the plurality of key points, and the derivatives of the vertical coordinates of the plurality of key points.

After the derivatives of the vertical coordinates of the plurality of key points output by the deep learning network model are obtained, a vertical coordinate of a 1st key point can be determined based on a formula $y_1 = y_0 + y_1' (x_1 - x_0)$ and based on the location coordinates of the start point, a horizontal coordinate of the 1st key point, and a derivative of the vertical coordinate of the 1st key point. Herein, $y_1$ represents the vertical coordinate of the 1st key point, $y_0$ represents the vertical coordinate of the start point, $y_1'$ represents the derivative of the vertical coordinate of the 1st key point, $x_1$ represents the horizontal coordinate of the 1st key point, and $x_0$ represents the horizontal coordinate of the start point. After the vertical coordinate of the 1st key point is determined, the vertical coordinate of the 2nd key point can be determined based on a formula $y_2 = y_1 + y_2' (x_2 - x_1)$. Herein, $y_2$ represents the vertical coordinate of the 2nd key point, $y_1$ represents the vertical coordinate of the 1st key point, $y_2'$ represents the derivative of the vertical coordinate of the 2nd key point, $x_2$ represents the horizontal coordinate of the 2nd key point, and $x_1$ represents the horizontal coordinate of the 1st key point. By analogy, vertical coordinates of a plurality of other key points can be determined.

For example, in FIG. 5, Xmax represents the maximum image luminance, Xmin represents the minimum image luminance, and $p_k$ represents the target probabilities respectively corresponding to the plurality of sampling points. The maximum image luminance, the minimum image luminance, and the target probabilities are input into the deep learning network model, to obtain $d_k$, namely, the derivative vector including the derivatives of the vertical coordinates of the plurality of key points. Then, $Y_k$, namely, a vertical coordinate vector including the vertical coordinates of the plurality of key points, can be obtained based on the derivative vector, the location coordinates of the start point, the location coordinates of the end point, and the horizontal coordinates of the plurality of the key points.

In some embodiments, the deep learning network model may be obtained in the following manner: obtaining a plurality of training samples, where each training sample includes maximum sample image luminance, minimum sample image luminance, target probabilities respectively corresponding to a plurality of sample sampling points, and derivatives of vertical coordinates of a plurality of sample key points, and the derivatives of the vertical coordinates of the plurality of sample key points are determined by using the optimization equation; and training an initial network model based on the plurality of training samples, to obtain the deep learning network model.

A manner of obtaining a sample image is the same as a manner of obtaining the first image, and a manner of determining the maximum sample image luminance, the minimum sample image luminance, and the target probabilities respectively corresponding to the plurality of sample sampling points is also the same as the foregoing described manner of determining the maximum image luminance, the minimum image luminance, and the target probabilities respectively corresponding to the plurality of sampling points of the first image. Details are not described herein again.

After the sample image is obtained, derivatives of vertical coordinates of a plurality of sample key points of each sample image may be determined by using the optimization equation; each training sample is obtained based on the maximum sample image luminance, the minimum sample image luminance, and the target probabilities respectively corresponding to the plurality of sample sampling points; and each training sample is input into an initial network model, to train the initial network model. In this way, the deep learning network model is obtained.

In the foregoing training process, a used loss function is $L_1 = \dfrac{1}{n} \sum_{i=1}^{n} \left| y_i - y_i^p \right|$. Herein, $L_1$ represents the loss function, $n$ is a sum of quantities of a plurality of sample key points in all training samples, $y_i$ represents a vertical coordinate that is of an ith sample key point and that is determined by using the optimization equation, $y_i^p$ represents a vertical coordinate that is of the ith sample key point and that is predicted by the deep learning network model, and $y_i$ and $y_i^p$ correspond to a same horizontal coordinate. The loss function can reflect a degree of a difference between the vertical coordinate predicted by the deep learning network model and the vertical coordinate determined by using the optimization equation, and is used to guide optimization of the deep learning network model.

Because the deep learning network model is obtained through training based on the training sample obtained by using the optimization equation, similar to the optimization equation, the deep learning network model also considers at least one of the image luminance, the image contrast, and the human-eye-sensed contrast threshold, to also achieve good display effect of an image obtained through tone mapping.

After the vertical coordinates of the plurality of key points are determined in the foregoing two implementations, the location coordinates of the plurality of key points may be obtained by combining each vertical coordinate and a corresponding horizontal coordinate.

**Step 203:** Encode the first image and the location coordinates of the plurality of sampling points into a bitstream.

The location coordinates of the plurality of sampling points are determined in step 202. After the location coordinates of the plurality of sampling points are determined, the location coordinates of the plurality of sampling points may be directly encoded into the bitstream, or may be encoded into the bitstream after normalization processing. In this way, system complexity of the subsequent decoder side can be reduced.

In some embodiments, normalization processing is performed on the vertical coordinates in the location coordinates of the plurality of sampling points, and the horizontal coordinates remain unchanged, to obtain location coordinates that are of the plurality of sampling points and that are obtained through normalization processing.

Because the encoder side does not learn of information on the decoder side, the location coordinates that are of the plurality of sampling points and that are determined by the encoder side are virtual location coordinates. The decoder side cannot directly generate the tone mapping curve based on the virtual location coordinates, but needs to convert the virtual location coordinates into real location coordinates based on the information (mainly maximum luminance that can be displayed on the decoder side, namely, the maximum screen luminance) on the decoder side, and then determine the tone mapping curve based on the real location coordinates of the plurality of sampling points. However, all vertical coordinates obtained through normalization processing are between 0 and 1, a smallest vertical coordinate is 0, and a largest vertical coordinate is 1. Therefore, the virtual location coordinates can be converted into the real location coordinates based on a corresponding horizontal coordinate by multiplying each vertical coordinate by the maximum luminance that can be displayed on the decoder side. If normalization processing is not performed, during conversion, conversion cannot be performed in the foregoing manner, but needs to be performed in another manner including more steps. This increases system complexity of the decoder side.

In this embodiment of this application, when the location coordinates of the plurality of sampling points of the tone mapping curve corresponding to the first image are determined, the used optimization equation or deep learning network model considers at least one of the image contrast, the image luminance, and the human-eye-sensed contrast threshold, so that the determined location coordinates of the plurality of key points are an optimal solution that meets a condition of the optimization equation, and a contrast of the subsequent image obtained through tone mapping is kept consistent with the contrast of the first image to a largest extent. Luminance of each sample in the subsequent image obtained through tone mapping is the same as a luminance value of a corresponding sample in the first image as much as possible, and it is ensured that after the luminance of the mapped image changes, the human eye can still sense a luminance difference of each region of the image, and further sense more details of the image obtained through tone mapping, thereby achieving better display effect. In addition, before the location coordinates of the plurality of sampling points are encoded into the bitstream, normalization processing is performed on the location coordinates, so that the encoder side can more conveniently convert the virtual location coordinates into the real location coordinates, thereby reducing system complexity of the decoder side.

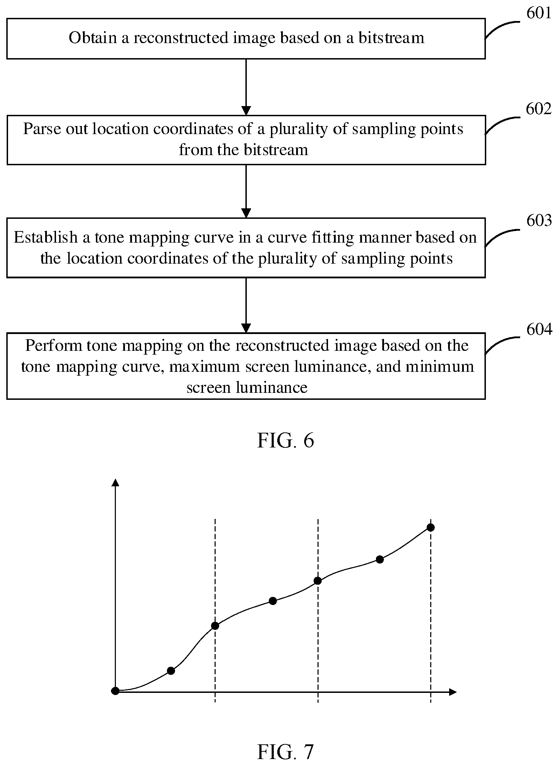

FIG. 6 is a flowchart of an image decoding method according to an embodiment of this application. The method may be applied to a destination apparatus in the foregoing implementation environment, and the destination apparatus is also referred to as a decoder side. As shown in FIG. 6, the method includes the following steps.

**Step 601:** Obtain a reconstructed image based on a bitstream.

The reconstructed image is an image constructed based on first image data in the bitstream.

The decoder side parses out related image data from the bitstream, and processes the image data, to obtain the reconstructed image.

**Step 602:** Parse out location coordinates of a plurality of sampling points from the bitstream, where the location coordinates of the plurality of sampling points are determined by using an optimization equation or a deep learning network model, the optimization equation and the deep learning network model are determined based on at least one of an image contrast, image luminance, and a human-eye-sensed contrast threshold, and the plurality of sampling points include a start point, an end point, and a plurality of key points located between the start point and the end point.

The optimization equation includes but is not limited to any one of the foregoing equations (1) to (3).

It can be learned from the foregoing descriptions that the location coordinates that are of the plurality of sampling points and that are parsed out from the bitstream are virtual location coordinates, the virtual location coordinates further need to be converted into real location coordinates based on information (mainly maximum luminance that can be displayed on the decoder side, namely, maximum screen luminance) on the decoder side, and the obtained real location coordinates are used as subsequently applied location coordinates.

It can also be learned from the foregoing descriptions that the virtual location coordinates parsed out from the bitstream may be location coordinates obtained through normalization processing, or may be location coordinates on which normalization processing is not performed.

When the virtual location coordinates are location coordinates obtained through normalization processing, a vertical coordinate in the virtual location coordinates is a vertical coordinate obtained through normalization processing, and normalization processing is performed on a horizontal coordinate. In this case, a vertical coordinate in each pair of virtual location coordinates is multiplied by the maximum screen luminance, to obtain a converted vertical coordinate, and the converted vertical coordinate is combined with a corresponding horizontal coordinate, to obtain real location coordinates of the plurality of sampling points.

When the virtual location coordinates are location coordinates on which normalization processing is not performed, the decoder side may perform normalization processing on the virtual location coordinates, to obtain normalized virtual coordinates; determine a maximum screen luminance value; multiply a vertical coordinate in each pair of normalized virtual location coordinates by the value, to obtain a converted vertical coordinate; and combine the converted vertical coordinate and a corresponding horizontal coordinate, to obtain real location coordinates of the plurality of sampling points. Certainly, the virtual location coordinates on which normalization processing is not performed may be converted into the real location coordinates in another manner. This is not limited in this embodiment of this application.

In some embodiments, after the real location coordinates of the plurality of sampling points are determined, a data form of the real location coordinates may be further transformed.

In the foregoing process, because the maximum screen luminance value is usually in a standard data form, for example, 100 nits or 1000 nits, the obtained real location coordinates are usually in a standard data form. In this case, a form of the real location coordinates may be converted to a log form with any base. To be specific, a horizontal coordinate and a vertical coordinate of the standard data form are converted to a horizontal coordinate and a vertical coordinate of a corresponding log form. For example, (10 nits, 3 nits) is converted to a log form $(lg10^{10}, lg10^3)$ with a base of 10. Certainly, the form may alternatively be converted into another data form. This is not limited in this embodiment of this application.

**Step 603:** Obtain a tone mapping curve based on the location coordinates of the plurality of sampling points.

It should be noted that the location coordinates used in this step are real location coordinates in any data form determined in step 601.

In some embodiments, the tone mapping curve is determined in a curve fitting manner. The curve fitting manner includes but is not limited to a straight line connection manner, a cubic spline connection manner, and a polynomial fitting manner.

For example, in FIG. 4, each black dot represents one sampling point, a 1st black dot is a start point and location coordinates are (0, 0), a last black dot is an end point and location coordinates are $(x_N, y_N)$, $(x_2, y_2)$ is location coordinates of a 2nd sampling point, namely, location coordinates of a 1st key point, and $(x_k, y_k)$ is location coordinates of a kth sampling point. It is assumed that the curve fitting manner is a straight line connection manner. As shown in FIG. 4, N sampling points are sequentially connected through straight line segments. In this way, the tone mapping curve can be successfully established. A horizontal axis of the tone mapping curve is luminance of a sample in the reconstructed image, and a vertical axis is screen display luminance, namely, luminance of each sample in the reconstructed image after tone mapping.

For example, in FIG. 7, each black dot represents a sampling point. If the curve fitting manner is a cubic spline connection manner, as shown in FIG. 7, a cubic spline curve connecting every three sampling points can be uniquely determined based on location coordinates of the every three sampling points, and cubic spline curves of every three sampling points are combined, so that a tone mapping curve can be successfully established.

**Step 604:** Perform tone mapping on the reconstructed image based on the tone mapping curve, maximum screen luminance, and minimum screen luminance.

The maximum screen luminance is a maximum luminance value that may be displayed on the decoder side, and the minimum screen luminance is a minimum luminance value that may be displayed on the decoder side.

As shown in FIG. 4, the horizontal axis of the tone mapping curve is the luminance of the sample in the reconstructed image, and the vertical axis is the screen display luminance. For each sample in the reconstructed image, the luminance of the sample is obtained as the horizontal coordinate, and a corresponding vertical coordinate is searched for on the tone mapping curve. The vertical coordinate is the screen display luminance corresponding to the sample.

It can be learned from the foregoing descriptions that the horizontal coordinate that is of the end point and that is determined by the encoder side may be within a last histogram bin, or may be outside a last histogram bin. In some embodiments, the horizontal coordinate that is of the end point and that is determined by the encoder side is within the last histogram bin. In other words, the horizontal coordinate of the end point is less than the maximum image luminance. Consequently, luminance of some samples in the reconstructed image is greater than a maximum horizontal coordinate of the tone mapping curve. In this case, when tone mapping is performed on the reconstructed image, luminance of these samples is directly mapped to the maximum screen luminance. Similarly, in some embodiments, the horizontal coordinate that is of the start point and that is determined by the encoder side is within the 1st histogram bin. In other words, the horizontal coordinate of the start point is greater than the minimum image luminance. Consequently, luminance of some samples in the reconstructed image is less than a minimum horizontal coordinate of the tone mapping curve. In this case, when tone mapping is performed on the reconstructed image, luminance of these samples is directly mapped to the minimum screen luminance.

In this embodiment of this application, when the tone mapping curve is established based on the location coordinates that are of the plurality of sampling points and that are parsed out from the bitstream, location coordinates of a plurality of key points in the plurality of sampling points are determined by using the optimization equation or the deep learning network model. The optimization equation or the deep learning network model considers at least one of the image contrast, the image luminance, or the human-eye-sensed contrast threshold, so that the determined location coordinates of the plurality of key points are an optimal solution that meets a condition of the optimization equation, and a contrast of the subsequent image obtained through tone mapping is kept consistent with the contrast of the first image to a largest extent. Luminance of each sample in the image obtained through tone mapping is the same as a luminance value of a corresponding sample in the first image as much as possible, and it is ensured that after the luminance of the mapped image changes, the human eye can still sense a luminance difference of each region of the image, and further sense more details of the image obtained through tone mapping, thereby achieving better display effect.

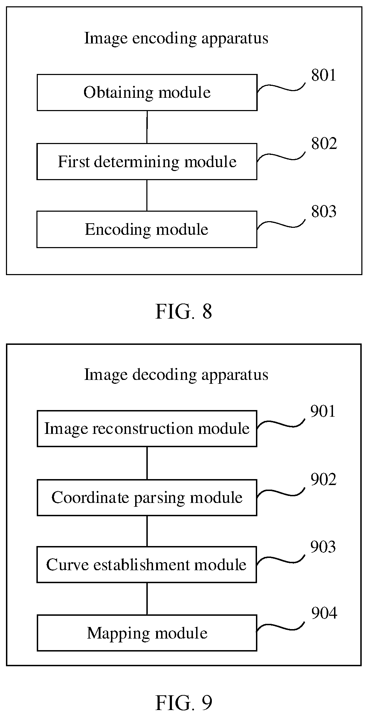

FIG. 8 is a diagram of a structure of an image encoding apparatus according to an embodiment of this application. The image encoding apparatus may be implemented as a part or an entirety of an encoder side device by using software, hardware, or a combination thereof. The encoder side device may be the source apparatus shown in FIG. 1. As shown in FIG. 8, the apparatus includes: an obtaining module 801, a first determining module 802, and an encoding module 803.

The obtaining module 801 is configured to obtain a first image. The first image is an image on which tone mapping needs to be performed.

The first determining module 802 is configured to determine location coordinates of a plurality of sampling points of a tone mapping curve corresponding to the first image based on the first image by using an optimization equation or a deep learning network model. The optimization equation and the deep learning network model are determined based on at least one of an image contrast, image luminance, and a human-eye-sensed contrast threshold, and the plurality of sampling points include a start point, an end point, and a plurality of key points located between the start point and the end point.

The encoding module 803 is configured to encode the first image and the location coordinates of the plurality of sampling points into a bitstream.

Optionally, the first determining module 802 includes:

a generation submodule, configured to generate a target histogram based on the first image, where the target histogram includes a plurality of histogram bins, the plurality of histogram bins are obtained through division based on maximum image luminance and minimum image luminance of the first image, and a height of the histogram bin indicates a quantity of samples whose luminance is in the histogram bin in the first image;

a first coordinate determining submodule, configured to: determine location coordinates of the start point and location coordinates of the end point, where the location coordinates include a horizontal coordinate and a vertical coordinate; and select a point from each of the plurality of histogram bins as one of the plurality of key points, and use image luminance respectively corresponding to the plurality of key points as horizontal coordinates of the plurality of key points;

a probability determining submodule, configured to determine target probabilities respectively corresponding to the plurality of sampling points, where a target probability corresponding to the start point and a target probability corresponding to the end point are specified probabilities, and a target probability corresponding to the key point indicates a probability that image luminance of the key point falls within a histogram bin in which the key point is located; and

a second coordinate determining submodule, configured to determine vertical coordinates of the plurality of key points based on the location coordinates of the start point, the location coordinates of the end point, the target probabilities respectively corresponding to the plurality of sampling points, and the horizontal coordinates of the plurality of key points by using the optimization equation or the deep learning network model.

Optionally, the second coordinate determining submodule is specifically configured to:

determine human-eye-sensed contrast thresholds of the plurality of sampling points based on horizontal coordinates of the plurality of sampling points; and

obtain the vertical coordinates of the plurality of key points based on the location coordinates of the start point, the location coordinates of the end point, a quantity of the plurality of sampling points, the target probabilities respectively corresponding to the plurality of sampling points, the horizontal coordinates of the plurality of key points, and the human-eye-sensed contrast thresholds of the plurality of sampling points by solving the optimization equation.

Optionally, the second coordinate determining submodule is specifically configured to:

input the maximum image luminance, the minimum image luminance, and the target probabilities respectively corresponding to the plurality of sampling points into the deep learning network model, to obtain derivatives that are of the vertical coordinates of the plurality of key points and that are output by the deep learning network model; and determine the vertical coordinates of the plurality of key points based on the location coordinates of the start point, the location coordinates of the end point, the horizontal coordinates of the plurality of key points, and the derivatives of the vertical coordinates of the plurality of key points.

Optionally, the apparatus further includes:

a sample obtaining module, configured to obtain a plurality of training samples, where each training sample includes maximum sample image luminance, minimum sample image luminance, target probabilities respectively corresponding to a plurality of sample sampling points, and derivatives of vertical coordinates of a plurality of sample key points, and the derivatives of the vertical coordinates of the plurality of sample key points are determined by using the optimization equation; and

a model training module, configured to train an initial network model based on the plurality of training samples, to obtain the deep learning network model.

Optionally, the optimization equation includes but is not limited to any one of the following equations:

$$y' = \arg\min\left[(1-\lambda)\sum_{k=1}^{N-1} p_k \left(\frac{1}{t(x_k)} - \frac{y_{k+1}-y_k}{t(x_k)\delta}\right)^2 + \lambda\sum_{k=1}^{N} p_k (y_k - x_k)^2\right];$$

or

$$y' = \arg\min\left[(1-\lambda)\sum_{k=1}^{N-1} p_k \left(|\,y_{k+1}-y_k\,| - t(x_k)|\,x_{k+1}-x_k\,|\right)^2 + \lambda\sum_{k=1}^{N} p_k (y_k - x_k)^2\right];$$

or

$$y' = \arg\min\left[(1-\lambda)\sum_{k=1}^{N-1} p_k \rho\left(y_{k+1}-y_k, t(x_k)(x_{k+1}-x_k)\right) + \lambda\sum_{k=1}^{N} p_k (y_k - x_k)^2\right].$$

$y'$ represents a derivative vector consisting of the derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

In this embodiment of this application, when the location coordinates of the plurality of sampling points of the tone mapping curve corresponding to the first image are determined, the used optimization equation or deep learning network model considers at least one of the image contrast, the image luminance, and the human-eye-sensed contrast threshold, so that the determined location coordinates of the plurality of key points are an optimal solution that meets a condition of the optimization equation, and a contrast of the subsequent image obtained through tone mapping is kept consistent with the contrast of the first image to a largest extent. Luminance of each sample in the subsequent image obtained through tone mapping is the same as a luminance value of a corresponding sample in the first image as much as possible, and it is ensured that after the luminance of the mapped image changes, the human eye can still sense a luminance difference of each region of the image, and further sense more details of the image obtained through tone mapping, thereby achieving better display effect.

It should be noted that, when the image encoding apparatus provided in the foregoing embodiments performs encoding, division into the foregoing functional modules is merely used as an example for description. During actual application, the foregoing functions may be allocated to different functional modules for implementation according to a requirement. In other words, an internal structure of the apparatus is divided into different functional modules to implement all or some of the functions described above. In addition, the image encoding apparatus provided in the foregoing embodiments and the image encoding method embodiment belong to a same concept. For a specific implementation process thereof, refer to the method embodiments. Details are not described herein again.

FIG. 9 is a diagram of a structure of an image decoding apparatus according to an embodiment of this application. The image decoding apparatus may be implemented as a part or an entirety of a decoder side device by using software, hardware, or a combination thereof. The decoder side device may be the destination apparatus shown in FIG. 1. As shown in FIG. 9, the apparatus includes an image reconstruction module 901, a coordinate parsing module 902, a curve establishment module 903, and a mapping module 904.

The image reconstruction module 901 is configured to obtain a reconstructed image based on a bitstream.

The coordinate parsing module 902 is configured to parse out location coordinates of a plurality of sampling points from the bitstream. The location coordinates of the plurality of sampling points are determined by using an optimization equation or a deep learning network model, the optimization equation and the deep learning network model are determined based on at least one of an image contrast, image luminance, and a human-eye-sensed contrast threshold, and the plurality of sampling points include a start point, an end point, and a plurality of key points located between the start point and the end point.

The curve establishment module 903 is configured to establish a tone mapping curve in a curve fitting manner based on the location coordinates of the plurality of sampling points.

The mapping module 904 is configured to perform tone mapping on the reconstructed image based on the tone mapping curve, maximum screen luminance, and minimum screen luminance.

Optionally, the optimization equation includes but is not limited to any one of the following equations:

$$y' = \arg\min\left[ (1-\lambda)\sum_{k=1}^{N-1} p_k \left( \frac{1}{t(x_k)} - \frac{y_{k+1}-y_k}{t(x_k)\delta} \right)^2 + \lambda\sum_{k=1}^{N} p_k (y_k - x_k)^2 \right];$$

or

$$y' = \arg\min\left[ (1-\lambda)\sum_{k=1}^{N-1} p_k \left( |y_{k+1}-y_k| - t(x_k)|x_{k+1}-x_k| \right)^2 + \lambda\sum_{k=1}^{N} p_k (y_k - x_k)^2 \right];$$

or

$$y' = \arg\min\left[ (1-\lambda)\sum_{k=1}^{N-1} p_k \rho\left( y_{k+1}-y_k, t(x_k)(x_{k+1}-x_k) \right) + \lambda\sum_{k=1}^{N} p_k (y_k - x_k)^2 \right].$$

$y'$ represents a derivative vector consisting of the derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

Optionally, the tone mapping curve is determined in a curve fitting manner, and the curve fitting manner includes but is not limited to a straight line connection manner, a cubic spline connection manner, and a polynomial fitting manner.

In this embodiment of this application, when the tone mapping curve is established based on the location coordinates that are of the plurality of sampling points and that are parsed out from the bitstream, location coordinates of a plurality of key points in the plurality of sampling points are determined by using the optimization equation or the deep learning network model. The optimization equation or the deep learning network model considers at least one of the image contrast, the image luminance, or the human-eye-sensed contrast threshold, so that the determined location coordinates of the plurality of key points are an optimal solution that meets a condition of the optimization equation, and a contrast of the subsequent image obtained through tone mapping is kept consistent with the contrast of the first image to a largest extent. Luminance of each sample in the image obtained through tone mapping is the same as a luminance value of a corresponding sample in the first image as much as possible, and it is ensured that after the luminance of the mapped image changes, the human eye can still sense a luminance difference of each region of the image, and further sense more details of the image obtained through tone mapping, thereby achieving better display effect.

It should be noted that, when the image decoding apparatus provided in the foregoing embodiments performs decoding, division into the foregoing functional modules is merely used as an example for description. During actual application, the foregoing functions may be allocated to different functional modules for implementation according to a requirement. In other words, an internal structure of the apparatus is divided into different functional modules to implement all or some of the functions described above. In addition, the image decoding apparatus provided in the foregoing embodiments and the image decoding method embodiment belong to a same concept. For a specific implementation process thereof, refer to the method embodiments. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions.

The foregoing descriptions are merely embodiments of this application, but are not intended to limit this application. Any modification, equivalent replacement, or improvement made without departing from the spirit and principle of this application should fall within the protection scope of this application.

## Claims

1. An image encoding method, wherein the method comprises:

   obtaining a first image, wherein the first image is an image on which tone mapping needs to be performed;
   determining location coordinates of a plurality of sampling points of a tone mapping curve corresponding to the first image based on the first image by using an optimization equation or a deep learning network model, wherein the optimization equation and the deep learning network model are determined based on at least one of an image contrast, image luminance, and a human-eye-sensed contrast threshold, and the plurality of sampling points comprise a start point, an end point, and a plurality of key points located between the start point and the end point; and
   encoding the first image and the location coordinates of the plurality of sampling points into a bitstream.

2. The method according to claim 1, wherein determining the location coordinates of the plurality of sampling points of the tone mapping curve corresponding to the first image based on the first image by using the optimization equation or the deep learning network model comprises:

   generating a target histogram based on the first image, wherein the target histogram comprises a plurality of histogram bins, the plurality of histogram bins are obtained through division based on maximum image luminance and minimum image luminance of the first image, and a height of the histogram bin indicates a quantity of samples whose luminance is in the histogram bin in the first image;
   determining location coordinates of the start point and location coordinates of the end point, wherein the location coordinates comprise a horizontal coordinate and a vertical coordinate;

selecting a point from each of the plurality of histogram bins as one of the plurality of key points, and using image luminance respectively corresponding to the plurality of key points as horizontal coordinates of the plurality of key points;

determining target probabilities respectively corresponding to the plurality of sampling points, wherein a target probability corresponding to the start point and a target probability corresponding to the end point are specified probabilities, and a target probability corresponding to the key point indicates a probability that image luminance of the key point falls within a histogram bin in which the key point is located; and

determining vertical coordinates of the plurality of key points based on the location coordinates of the start point, the location coordinates of the end point, the target probabilities respectively corresponding to the plurality of sampling points, and the horizontal coordinates of the plurality of key points by using the optimization equation or the deep learning network model.

3. The method according to claim 2, wherein determining the vertical coordinates of the plurality of key points based on the location coordinates of the start point, the location coordinates of the end point, the target probabilities respectively corresponding to the plurality of sampling points, and the horizontal coordinates of the plurality of key points by using the optimization equation comprises:

determining human-eye-sensed contrast thresholds of the plurality of sampling points based on horizontal coordinates of the plurality of sampling points; and

obtaining the vertical coordinates of the plurality of key points based on the location coordinates of the start point, the location coordinates of the end point, a quantity of the plurality of sampling points, the target probabilities respectively corresponding to the plurality of sampling points, the horizontal coordinates of the plurality of key points, and the human-eye-sensed contrast thresholds of the plurality of sampling points by solving the optimization equation.

4. The method according to claim 2, wherein determining the vertical coordinates of the plurality of key points based on the location coordinates of the start point, the location coordinates of the end point, the target probabilities respectively corresponding to the plurality of sampling points, and the horizontal coordinates of the plurality of key points by using the deep learning network model comprises:

inputting the maximum image luminance, the minimum image luminance, and the target probabilities respectively corresponding to the plurality of sampling points into the deep learning network model, to obtain derivatives that are of the vertical coordinates of the plurality of key points and that are output by the deep learning network model; and

determining the vertical coordinates of the plurality of key points based on the location coordinates of the start point, the location coordinates of the end point, the horizontal coordinates of the plurality of key points, and the derivatives of the vertical coordinates of the plurality of key points.

5. The method according to claim 4, wherein the method further comprises:

obtaining a plurality of training samples, wherein each training sample comprises maximum sample image luminance, minimum sample image luminance, target probabilities respectively corresponding to a plurality of sample sampling points, and derivatives of vertical coordinates of a plurality of sample key points, and the derivatives of the vertical coordinates of the plurality of sample key points are determined by using the optimization equation; and

training an initial network model based on the plurality of training samples, to obtain the deep learning network model.

6. The method according to any one of claims 1 to 5, wherein the optimization equation comprises but is not limited to any one of the following equations:

$$y' = \arg\min \left[ (1-\lambda) \sum_{k=1}^{N-1} p_k \left( \frac{1}{t(x_k)} - \frac{y_{k+1} - y_k}{t(x_k)\delta} \right)^2 + \lambda \sum_{k=1}^{N} p_k (y_k - x_k)^2 \right];$$

or

$$y' = \arg\min\left[(1-\lambda)\sum_{k=1}^{N-1} p_k \left(\mid y_{k+1} - y_k \mid -t\left(x_k\right)\mid x_{k+1} - x_k \mid\right)^2 + \lambda\sum_{k=1}^{N} p_k \left(y_k - x_k\right)^2\right];$$

or

$$y' = \arg\min\left[(1-\lambda)\sum_{k=1}^{N-1} p_k \rho\left(y_{k+1} - y_k, t\left(x_k\right)\left(x_{k+1} - x_k\right)\right) + \lambda\sum_{k=1}^{N} p_k \left(y_k - x_k\right)^2\right],$$

wherein
$y'$ represents a derivative vector consisting of the derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

7. An image decoding method, wherein the method comprises:

obtaining a reconstructed image based on a bitstream;
parsing out location coordinates of a plurality of sampling points from the bitstream, wherein the location coordinates of the plurality of sampling points are determined by using an optimization equation or a deep learning network model, the optimization equation and the deep learning network model are determined based on at least one of an image contrast, image luminance, and a human-eye-sensed contrast threshold, and the plurality of sampling points comprise a start point, an end point, and a plurality of key points located between the start point and the end point;
obtaining a tone mapping curve based on the location coordinates of the plurality of sampling points; and
performing tone mapping on the reconstructed image based on the tone mapping curve, maximum screen luminance, and minimum screen luminance.

8. The method according to claim 7, wherein the tone mapping curve is determined in a curve fitting manner, and the curve fitting manner comprises but is not limited to a straight line connection manner, a cubic spline connection manner, and a polynomial fitting manner.

9. The method according to claim 7, wherein the optimization equation comprises but is not limited to any one of the following equations:

$$y' = \arg\min\left[(1-\lambda)\sum_{k=1}^{N-1} p_k \left(\frac{1}{t\left(x_k\right)} - \frac{y_{k+1} - y_k}{t\left(x_k\right)\delta}\right)^2 + \lambda\sum_{k=1}^{N} p_k \left(y_k - x_k\right)^2\right];$$

or

$$y' = \arg\min\left[(1-\lambda)\sum_{k=1}^{N-1} p_k \left(\mid y_{k+1} - y_k \mid -t\left(x_k\right)\mid x_{k+1} - x_k \mid\right)^2 + \lambda\sum_{k=1}^{N} p_k \left(y_k - x_k\right)^2\right];$$

or

$$y' = \arg\min\left[(1-\lambda)\sum_{k=1}^{N-1} p_k \rho\left(y_{k+1} - y_k, t(x_k)(x_{k+1} - x_k)\right) + \lambda\sum_{k=1}^{N} p_k\left(y_k - x_k\right)^2\right],$$

wherein
y' represents a derivative vector consisting of derivatives of vertical coordinates of the plurality of key points, $N$ represents a quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

10. An image encoding apparatus, wherein the apparatus comprises:

an obtaining module, configured to obtain a first image, wherein the first image is an image on which tone mapping needs to be performed;
a first determining module, configured to determine location coordinates of a plurality of sampling points of a tone mapping curve corresponding to the first image based on the first image by using an optimization equation or a deep learning network model, wherein the optimization equation and the deep learning network model are determined based on at least one of an image contrast, image luminance, and a human-eye-sensed contrast threshold, and the plurality of sampling points comprise a start point, an end point, and a plurality of key points located between the start point and the end point; and
an encoding module, configured to encode the first image and the location coordinates of the plurality of sampling points into a bitstream.

11. The apparatus according to claim 10, wherein the first determining module comprises:

a generation submodule, configured to generate a target histogram based on the first image, wherein the target histogram comprises a plurality of histogram bins, the plurality of histogram bins are obtained through division based on maximum image luminance and minimum image luminance of the first image, and a height of the histogram bin indicates a quantity of samples whose luminance is in the histogram bin in the first image;
a first coordinate determining submodule, configured to: determine location coordinates of the start point and location coordinates of the end point, wherein the location coordinates comprise a horizontal coordinate and a vertical coordinate; and select a point from each of the plurality of histogram bins as one of the plurality of key points, and use image luminance respectively corresponding to the plurality of key points as horizontal coordinates of the plurality of key points;
a probability determining submodule, configured to determine target probabilities respectively corresponding to the plurality of sampling points, wherein a target probability corresponding to the start point and a target probability corresponding to the end point are specified probabilities, and a target probability corresponding to the key point indicates a probability that image luminance of the key point falls within a histogram bin in which the key point is located; and
a second coordinate determining submodule, configured to determine vertical coordinates of the plurality of key points based on the location coordinates of the start point, the location coordinates of the end point, the target probabilities respectively corresponding to the plurality of sampling points, and the horizontal coordinates of the plurality of key points by using the optimization equation or the deep learning network model.

12. The apparatus according to claim 11, wherein the second coordinate determining submodule is specifically configured to:

determine human-eye-sensed contrast thresholds of the plurality of sampling points based on horizontal coordinates of the plurality of sampling points; and
obtain the vertical coordinates of the plurality of key points based on the location coordinates of the start point, the location coordinates of the end point, a quantity of the plurality of sampling points, the target probabilities respectively corresponding to the plurality of sampling points, the horizontal coordinates of the plurality of key points, and the human-eye-sensed contrast thresholds of the plurality of sampling points by solving the optimization equation.

13. The apparatus according to claim 11, wherein the second coordinate determining submodule is specifically configured to:

input the maximum image luminance, the minimum image luminance, and the target probabilities respectively corresponding to the plurality of sampling points into the deep learning network model, to obtain derivatives that are of the vertical coordinates of the plurality of key points and that are output by the deep learning network model; and
determine the vertical coordinates of the plurality of key points based on the location coordinates of the start point, the location coordinates of the end point, the horizontal coordinates of the plurality of key points, and the derivatives of the vertical coordinates of the plurality of key points.

14. The apparatus according to claim 13, wherein the apparatus further comprises:

a sample obtaining module, configured to obtain a plurality of training samples, wherein each training sample comprises maximum sample image luminance, minimum sample image luminance, target probabilities respectively corresponding to a plurality of sample sampling points, and derivatives of vertical coordinates of a plurality of sample key points, and the derivatives of the vertical coordinates of the plurality of sample key points are determined by using the optimization equation; and
a model training module, configured to train an initial network model based on the plurality of training samples, to obtain the deep learning network model.

15. The apparatus according to any one of claims 10 to 14, wherein the optimization equation comprises but is not limited to any one of the following equations:

$$y' = \arg\min\left[ (1-\lambda)\sum_{k=1}^{N-1} p_k \left( \frac{1}{t(x_k)} - \frac{y_{k+1}-y_k}{t(x_k)\delta} \right)^2 + \lambda\sum_{k=1}^{N} p_k (y_k - x_k)^2 \right];$$

or

$$y' = \arg\min\left[ (1-\lambda)\sum_{k=1}^{N-1} p_k \left( |y_{k+1}-y_k| - t(x_k)|x_{k+1}-x_k| \right)^2 + \lambda\sum_{k=1}^{N} p_k (y_k - x_k)^2 \right];$$

or

$$y' = \arg\min\left[ (1-\lambda)\sum_{k=1}^{N-1} p_k \rho\left( y_{k+1}-y_k, t(x_k)(x_{k+1}-x_k) \right) + \lambda\sum_{k=1}^{N} p_k (y_k - x_k)^2 \right],$$

wherein
$y'$ represents a derivative vector consisting of the derivatives of the vertical coordinates of the plurality of key points, $N$ represents the quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

16. An image decoding apparatus, wherein the apparatus comprises:

an image reconstruction module, configured to obtain a reconstructed image based on a bitstream;
a coordinate parsing module, configured to parse out location coordinates of a plurality of sampling points from the bitstream, wherein the location coordinates of the plurality of sampling points are determined by using an optimization equation or a deep learning network model, the optimization equation and the deep learning network model are determined based on at least one of an image contrast, image luminance, and a human-eye-sensed contrast threshold, and the plurality of sampling points comprise a start point, an end point, and a plurality of key points located between the start point and the end point;

a curve establishment module, configured to obtain a tone mapping curve based on the location coordinates of the plurality of sampling points; and

a mapping module, configured to perform tone mapping on the reconstructed image based on the tone mapping curve, maximum screen luminance, and minimum screen luminance.

17. The apparatus according to claim 16, wherein the tone mapping curve is determined in a curve fitting manner, and the curve fitting manner comprises but is not limited to a straight line connection manner, a cubic spline connection manner, and a polynomial fitting manner.

18. The apparatus according to claim 16, wherein the optimization equation comprises but is not limited to any one of the following equations:

$$y' = \arg\min\left[ (1-\lambda)\sum_{k=1}^{N-1} p_k \left( \frac{1}{t(x_k)} - \frac{y_{k+1}-y_k}{t(x_k)\delta} \right)^2 + \lambda\sum_{k=1}^{N} p_k \left( y_k - x_k \right)^2 \right];$$

or

$$y' = \arg\min\left[ (1-\lambda)\sum_{k=1}^{N-1} p_k \left( |\, y_{k+1}-y_k\,| - t(x_k)\,|\, x_{k+1}-x_k\,| \right)^2 + \lambda\sum_{k=1}^{N} p_k \left( y_k - x_k \right)^2 \right];$$

or

$$y' = \arg\min\left[ (1-\lambda)\sum_{k=1}^{N-1} p_k \rho\left( y_{k+1}-y_k, t(x_k)(x_{k+1}-x_k) \right) + \lambda\sum_{k=1}^{N} p_k \left( y_k - x_k \right)^2 \right],$$

wherein

$y'$ represents a derivative vector consisting of derivatives of vertical coordinates of the plurality of key points, $N$ represents a quantity of the plurality of sampling points, $p_k$ represents a target probability corresponding to a $k^{th}$ sampling point, $x_k$ represents a horizontal coordinate of the $k^{th}$ sampling point, $t(x_k)$ represents a human-eye-sensed contrast threshold of the $k^{th}$ sampling point, $y_k$ represents a vertical coordinate of the $k^{th}$ sampling point, $y_{k+1}$ represents a vertical coordinate of a $(k+1)^{th}$ sampling point, $\delta$ represents a width of each histogram bin, $\lambda$ represents a weight coefficient, and P represents a Pearson correlation coefficient.

19. A computer-readable storage medium, wherein the storage medium stores instructions, and when the instructions are run on a computer, the computer is enabled to perform steps of the method according to any one of claims 1 to 9.

20. A computer program product, wherein the computer program product comprises instructions, and when the instructions are run on a computer, the computer is enabled to perform steps of the method according to any one of claims 1 to 9.

Source apparatus 10

Data source 120 → Encoder 100 → Output interface 140

Storage apparatus 40

Link 30

Destination apparatus 20

Display apparatus 220 ← Decoder 200 ← Input interface 240

FIG. 1

Obtain a first image, where the first image is an image on which tone mapping needs to be performed — 201

Determine location coordinates of a plurality of sampling points of a tone mapping curve corresponding to the first image based on the first image by using an optimization equation or a deep learning network model — 202

Encode the first image and the location coordinates of the plurality of sampling points into a bitstream — 203

FIG. 2

Generate a target histogram based on a target image, where the target histogram includes a plurality of histogram bins, and a height of the histogram bin indicates a quantity of samples whose luminance is in the histogram bin in the target image

Determine location coordinates of a start point and location coordinates of an end point, where the location coordinates include a horizontal coordinate and a vertical coordinate; and select a point from each of the plurality of histogram bins as one of a plurality of key points, and use image luminance respectively corresponding to the plurality of key points as horizontal coordinates of the plurality of key points

Determine target probabilities respectively corresponding to a plurality of sampling points, where a target probability corresponding to the start point and a target probability corresponding to the end point are specified probabilities, and a target probability corresponding to the key point indicates a probability that image luminance of the key point falls within a histogram bin in which the key point is located

Determine vertical coordinates of the plurality of key points based on the location coordinates of the start point, the location coordinates of the end point, the target probabilities respectively corresponding to the plurality of sampling points, and the horizontal coordinates of the plurality of key points by using an optimization equation or a deep learning network model

FIG. 3

FIG. 4

FIG. 5

Obtain a reconstructed image based on a bitstream — 601

Parse out location coordinates of a plurality of sampling points from the bitstream — 602

Establish a tone mapping curve in a curve fitting manner based on the location coordinates of the plurality of sampling points — 603

Perform tone mapping on the reconstructed image based on the tone mapping curve, maximum screen luminance, and minimum screen luminance — 604

FIG. 6

FIG. 7

Image encoding apparatus

| Obtaining module | 801 |

| First determining module | 802 |

| Encoding module | 803 |

FIG. 8

Image decoding apparatus

| Image reconstruction module | 901 |

| Coordinate parsing module | 902 |

| Curve establishment module | 903 |

| Mapping module | 904 |

FIG. 9

## INTERNATIONAL SEARCH REPORT

| International application No. |
| --- |
| **PCT/CN2024/111449** |

| A. | CLASSIFICATION OF SUBJECT MATTER |
| --- | --- |

G06T5/92(2024.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 图像, 编码, 解码, 采样, 色调, 色度, 映射, 位置, 坐标, 模型, 方程, image, encode, decode, sample, colour, position, map, coordinate, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112106357 A (DOLBY LABORATORIES LICENSING CORP.) 18 December 2020 (2020-12-18)<br>claims 1-15, and figures 1-2 | 1, 7-8, 10, 16-17, 19-20 |
| A | CN 112215760 A (HUAWEI TECHNOLOGIES CO., LTD.) 12 January 2021 (2021-01-12)<br>entire document | 1-20 |
| A | CN 112686810 A (HUAWEI TECHNOLOGIES CO., LTD.) 20 April 2021 (2021-04-20)<br>entire document | 1-20 |
| A | US 2021150812 A1 (DOLBY LABORATORIES LICENSING CORP.) 20 May 2021 (2021-05-20)<br>entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 September 2024** | **10 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111449**

| Patent document cited in search report | | | Publication date (day/month/year) | Patent family member(s) | | | Publication date (day/month/year) |
|---|---|---|---|---|---|---|---|
| CN | 112106357 | A | 18 December 2020 | US | 2021195221 | A1 | 24 June 2021 |
| | | | | WO | 2019217751 | A1 | 14 November 2019 |
| | | | | EP | 3791577 | A1 | 17 March 2021 |
| | | | | JP | 2021518725 | A | 02 August 2021 |
| CN | 112215760 | A | 12 January 2021 | WO | 2021004176 | A1 | 14 January 2021 |
| | | | | KR | 20220020367 | A | 18 February 2022 |
| | | | | EP | 3975106 | A1 | 30 March 2022 |
| | | | | US | 2022122236 | A1 | 21 April 2022 |
| | | | | JP | 2023175868 | A | 12 December 2023 |
| | | | | JP | 2022539683 | A | 13 September 2022 |
| CN | 112686810 | A | 20 April 2021 | WO | 2021073304 | A1 | 22 April 2021 |
| | | | | US | 2022237754 | A1 | 28 July 2022 |
| | | | | EP | 4036841 | A1 | 03 August 2022 |
| US | 2021150812 | A1 | 20 May 2021 | WO | 2019199701 | A1 | 17 October 2019 |
| | | | | TW | 201944357 | A | 16 November 2019 |
| | | | | KR | 20200142035 | A | 21 December 2020 |
| | | | | CN | 112204617 | A | 08 January 2021 |
| | | | | EP | 3776474 | A1 | 17 February 2021 |
| | | | | JP | 7189230 | B2 | 13 December 2022 |

Form PCT/ISA/210 (patent family annex) (July 2022)

**REFERENCES CITED IN THE DESCRIPTION**

**Patent documents cited in the description**

- CN 202311440178